# EUROPÄISCHE PATENTANMELDUNG

(11) **EP 0 579 241 A1**
(43) Veröffentlichungstag der Anmeldung: **19.01.1994**
(21) Anmeldenummer: 93111431.8
(22) Anmeldetag: 16.07.1993
(51) Int. Cl.: B62D 5/083, B62D 6/02

(54) **Drehschieberventil, insbesondere für Hilfskraftlenkungen**

(30) Priorität: 17.07.1992 DE 4223536
(71) Anmelder: ZF FRIEDRICHSHAFEN Aktiengesellschaft, D-88038 Friedrichshafen (DE)
(72) Erfinder: Hetzel, Helmut, D-73529 Schwäbisch Gmünd (DE); Elser, Dieter, D-73457 Essingen (DE)

(57) **Zusammenfassung**

Ein Drehschieberventil besteht aus einem mit einer Lenkspindel (2) verbundenen Drehschieber (5) und einer mit einer Abtriebswelle (4) verbundenen Ventilbüchse (6). Lenkspindel (2) und Abtriebswelle (4) stehen über einen Drehstab (3) miteinander in Verbindung. Nach der Erfindung ist in einer Axialbohrung (24) der Ventilbuchse (6) eine Feder (25) und ein Wälzkörper (26) untergebracht. Die Feder (25) drückt den Wälzkörper (26) in eine Schrägflächennut (28) einer auf der Lenkspindel (2) festen Scheibe (30). Die Feder (25), der Wälzkörper (26) und die Scheibe (30) stellen eine Rückwirkungseinrichtung dar, die das Drehschieberventil (5, 6) exakt in der Mitte zentriert. Außerdem sorgt die Rückwirkungseinrichtung dafür, daß sich das Lenkgefühl bei schneller Fahrt verbessert. Die Rückwirkungseinrichtung benötigt einen sehr geringen axialen Bauraum.

## Beschreibung

Die Erfindung betrifft ein Drehschieberventil, insbesondere für Hilfskraftlenkungen, mit einer in einem Gehäuse gelagerten Ventilbuchse, die einen Drehschieber umschließt. Diese beiden Ventilbauteile sind zueinander verdrehbar angeordnet, dabei steht die Ventilbuchse mit einer Abtriebswelle und der Drehschieber mit einer ein Lenkhandrad tragenden Lenkspindel in Verbindung. Weiterhin sind die Lenkspindel und die Abtriebswelle durch einen Drehstab miteinander gekoppelt. Zwischen der Ventilbuchse und dem Drehschieber ist eine Rückwirkungeinrichtung eingebaut, die aus Schrägflächen mit zwischen den Schrägflächen abrollenden Wälzkörpern besteht. Auf die Wälzkörper wirkt eine Kraft, die man beim Aussteuern des Drehschieberventils am Lenkhandrad überwinden muß.

Aus der DE-PS 24 04 580 ist bereits eine Hilfskraftlenkung mit einem Drehschieberventil bekannt, dessen Rückwirkungseinrichtung aus zwei Radialbohrungen in der Ventilbuchse und in den Radialbohrungen geführten Kugeln besteht, die in keilförmige Schrägflächen am Außendurchmesser des Drehschiebers eingreifen. In die Radialbohrung leitet man einen von einer Pumpe erzeugten geschwindigkeitsabhängigen Druck ein, der die Kugel mehr oder weniger stark gegen die keilförmigen Schrägflächen drückt. Auf diese Weise erhält man am Lenkhandrad bei langsamer Fahrt eine geringe und bei schneller Fahrt eine verhältnismäßig hohe Rückwirkungskraft. Diese Maßnahme verbessert den Fahrbahnkontakt bei höheren Geschwindigkeiten. In dieser Lenkeinrichtung muß zur Hilfskraftanregelung der zwischen der Lenkspindel und der Abtriebswelle angeordnete Drehstab elastisch verdreht werden, der jedoch beim Aufhören der Lenkbewegung infolge seiner inneren Reibung sowie der Ventil- und Lagerreibung keine exakte Zentrierung des Drehschieberventils sichern kann. Auch die Rückwirkungseinrichtung ist nicht geeignet, eine exakte Zentrierwirkung zu ermöglichen, da, z. B. beim Einparken, kein geschwindigkeitsabhängiger Druck bereitsteht und eine sogenannte Feinzentrierung fehlt. Die Anregelung des Arbeitsdruckes ist in einem solchen Betriebszustand in den Lenkrichtungen unterschiedlich.

Der Erfindung liegt die Aufgabe zugrunde, ein Drehschieberventil zu schaffen, das aus der Neutralstellung heraus in beiden Lenkrichtungen den Arbeitsdruck bei gleichen Steuerwegen exakt anregelt. Außerdem soll sich die Rückwirkungseinrichtung bei geringstem Raumbedarf im Drehschieberventil unterbringen lassen.

Diese Aufgabe ist durch die Merkmale des Anspruchs 1 gelöst. Vorteilhafte Weiterbildungen ergeben sich aus den Unteransprüchen 2 bis 6.

Nach dem Hauptmerkmal der Erfindung weist die Ventilbuchse des Drehschieberventils in ihrer freien Stirnseite mindestens eine Axialbohrung auf, in die als Rückwirkungseinrichtung eine Feder und ein durch diese Feder belasteter Wälzkörper eingesetzt ist. Der Wälzkörper wirkt dabei mit einer Schrägflächennut zusammen, die in eine auf der Lenkspindel feste Scheibe eingearbeitet ist.

Nach Anspruch 2 läßt sich die Scheibe nach dem Ausrichten ihrer Schrägflächennut zu dem Wälzkörper, zusammen mit dem Drehstab, in der hydraulischen Mitte zweckmäßig mit der Lenkspindel verstiften.

Dadurch, daß die Kugel unter Federbelastung steht, ist eine einwandfreie Zentrierung des Drehschieberventils in allen getriebszuständen der Hilfskraftlenkung gesichert. Die Anregelung der Hilfskraft erfolgt aus der exakt eingestellten Mitte daher sehr präzise. Die Rückwirkungseinrichtung mit Feder und Wälzkörper ist ohne Vergrößerung des Ventildurchmessers raumsparend in der Ventilbuchse gehalten.

Nach Anspruch 3 weist die Ventilbuchse im Bereich der Bohrung für die Aufnahme der Rückwirkungseinrichtung einen Vorsprung auf, der mit Spiel in eine Aussparung der Lenkspindel für die Steuerwegbegrenzung des Drehschieberventils eingreift. Auf diese Weise erhält der Vorsprung eine Doppelfunktion mit dem Vorteil einer raumsparenden und fertigungsgünstigen Gestaltung.

Nach Anspruch 4 kann man die Rückwirkungseinrichtung auch so ausführen, daß die Axialbohrung auf der Federseite zugleich als Rückwirkungskammer ausgeführt ist, in welche über eine Ringnut der Ventilbuchse ein variabler Druck als Reaktionsdruck eingeleitet wird. Auf diese Weise läßt sich beispielsweise mit einem geschwindigkeitsabhängigen Druck bei langsamer Fahrt eine geringe und bei schneller Fahrt eine verhältnismäßig hohe Rückwirkungskraft am Lenkhandrad erzeugen.

Nach Anspruch 5 ist es vorteilhaft, daß die Rückwirkungseinrichtung ein Abschneidventil zur Begrenzung des Reaktionsdruckes enthält. Durch diese Maßnahme läßt sich der Druckanstieg bei schneller Fahrt auf einen Höchstwert begrenzen.

Nach Anspruch 6 ist in der Rückwirkungseinrichtung ein Abschneidventil vorgesehen. Die Feder drückt hier gegen einen Kolben, der sich über eine im Kolben sitzende Scheibe an dem Wälzkörper abstützt. Als Abschneidventil ist im Kolben ein durch eine Feder belastetes Abschneidkölbchen geführt, das die Rückwirkungskammer mit dem Rücklauf verbinden kann. Das Abschneidventil läßt sich somit raumsparend in die Rückwirkungseinrichtung integrieren.

Die Erfindung ist anhand der Zeichnung an drei Ausführungsbeispielen näher erläutert.
Es zeigen:
- Fig. 1: einen Teillängsschnitt durch ein Drehschieberventil;
- Fig. 2: einen Schnitt nach der Linie II-II in Fig. 1 bei fortgelassenem Ventilgehäuse;
- Fig. 3: eine Ansicht in Richtung des Pfeiles III in Fig. 2;
- Fig. 4: einen weiteren Schnitt, gesehen in Richtung IV-IV der Fig. 1 bei fortgelassenem Ventilgehäuse und
- Fig: 5 und 6: Ausschnittvergrößerungen von Ausführungsbeispielen mit einem Abschneidventil.

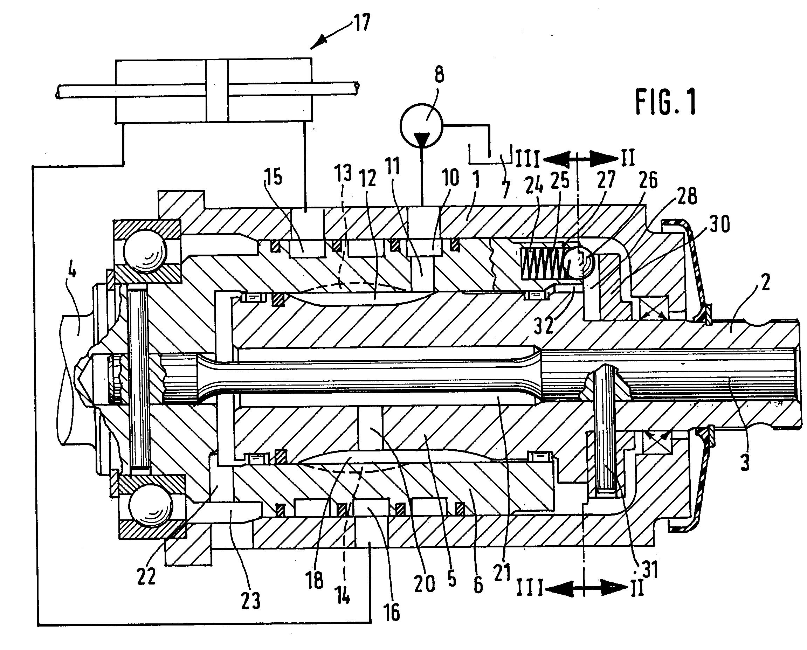

Im Längsschnitt nach Fig. 1 steht eine in einem Ventilgehäuse 1 gelagerte Lenkspindel 2 über einen Drehstab 3 mit einer Abtriebswelle 4 in Verbindung, die z. B. ein Ritzel eines Zahnstangenlenkgetriebes trägt. Ein unterer Abschnitt der Lenkspindel 2 ist als Drehschieber 5 ausgeführt, der sich in einer mit der Abtriebswelle 4 verbundenen Ventilbuchse 6 erstreckt. Der Drehschieber 5 und die Ventilbuchse 6 bilden in bekannter Weise ein Drehschieberventil mit zusammenwirkenden Steuernuten und zugehörigen Bohrungen. Eine an einen Tank 7 angeschlossene Hochdruckpumpe 8 steht über eine Ringnut 10 mit Bohrungen 11 der Ventilbuchse in Verbindung.

Die Bohrungen 11 münden in axiale Zulaufnuten 12 des Drehschiebers 5. Beim Verdrehen des Drehschieberventils 5, 6 können die Zulaufnuten 12 mit axialen Zylindernuten 13 bzw. 14 der Ventilbuchse 6 in Verbindung treten, die an Ringnuten 15 und 16 anschließen. Diese Ringnuten 15 und 16 münden über Druckleitungen in Druckräume eines Stellmotors 17. Schließlich befinden sich im Drehschieber 6 noch axiale Rücklaufnuten 18, die über Bohrungen 20 in einen Innenraum 21 münden. Der Innenraum 21 schließt über eine Bohrung 22 der Ventilbuchse 6 und eine Kammer 23 an den Tank 7 an.

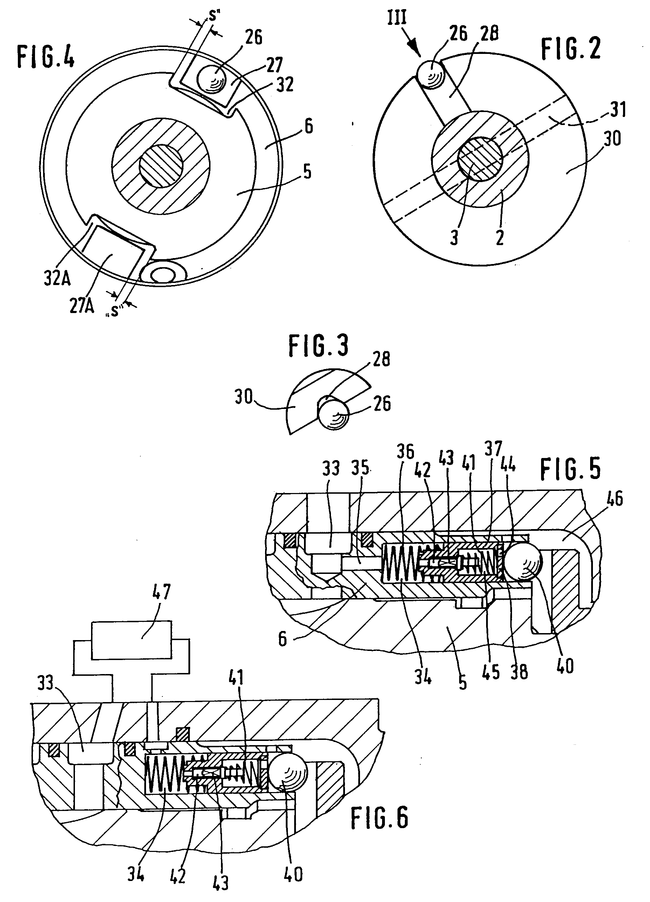

Nach der Erfindung weist die Ventilbuchse 6 auf ihrer freien Stirnseite als Rückwirkungseinrichtung eine Axialbohrung 24 auf, die eine Feder 25 und einen als Kugel ausgeführten Wälzkörper 26 enthält. Diese Rückwirkungseinrichtung 24, 25, 26 ist in einem Vorsprung 27 der Ventilbuchse 6 untergebracht. Die Kraft der Feder 25 drückt den Wälzkörper 26 in eine Schrägflächennut 28 (Fig. 3) einer Scheibe 30. Ein Stift 31 verbindet die Scheibe 30 fest mit der Lenkspindel 2 nach Zuordnen der Schrägflächennut 28 zur Position des Wälzkörpers 26. Der Stift 31 dient außerdem zur Befestigung des Drehstabes 3 mit der Lenkspindel 2 in der hydraulischen Mitte des Drehschieberventils 5, 6.

Der Vorsprung 27 der Ventilbuchse 6 ragt mit seitlichem Steuerspiel "S" in eine Aussparung 32 des Drehschiebers 5. Diametral liegt dem Vorsprung 27 ein weiterer Vorsprung 27A gegenüber, der zusammen mit einer Aussparung 32A gleichfalls der Steuerwegbegrenzung dient. In diesem Vorsprung läßt sich bei Bedarf eine weitere Rückwirkungseinrichtung unterbringen.

Beim Drehen an einem mit der Lenkspindel 2 verbundenen Lenkhandrad muß der Fahrer zunächst eine von der Kraft der Feder 25 bestimmte Rückwirkungskraft überwinden, bis sich der Drehstab um einen gewissen Winkelbetrag elastisch verdrehen läßt. Diese elastische Verdrehung vollzieht sich innerhalb des Steuerspieles "S", das in bekannter Weise zur Anregelung eines Arbeitsdruckes durch das Drehschieberventil 5, 6 benötigt wird. Während dieser Relativverdrehung des Drehschiebers 5 gegenüber der Ventilbuchse 6 läuft der Wälzkörper an einer der Flanken der Schrägflächennut 28 hoch, wobei der Wälzkörper 26 die Feder 25 zusammendrückt. Die so erzeugte Rückwirkungskraft ist bei schneller Fahrt für ein gutes Lenkgefühl verantwortlich, da sich die Lenkung "steifer" anfühlt.

Sollte die Lenkungshydraulik beispielsweise durch einen Defekt der Hochdruckpumpe ausfallen, dann kann man das Fahrzeug mit höherem Kraftaufwand nach Überwinden des Steuerspieles "S" mechanisch weiterlenken.

Das Ausführungsbeispiel nach Fig. 5 hat eine Axialbohrung 34, die zugleich die Funktion einer Rückwirkungskammer hat. Zu diesem Zweck führt von einer an die Pumpe 8 (Fig. 1) angeschlossenen Ringnut 33 eine kleine Bohrung 35 in die Axialbohrung 34. Der in die Axialbohrung 34 von der Belastung des Stellmotors 16 abhängige Arbeitsdruck wirkt zusammen mit der Kraft einer Feder 36 auf einen Kolben 37, der sich über eine Scheibe 38 an einem Wälzkörper 40 abstützt. Im Kolben 37 ist ein durch die Kraft einer Feder 41 in Dichtstellung gehaltenes Abschneidkölbchen 42 geführt. Steigt der Rückwirkungsdruck auf der Seite der Feder 36, der auch auf die Stirnseite des Abschneidkölbchens 42 wirkt, auf seinen Höchstwert an, dann bewegt sich dieses nach rechts. Dabei treten Anflächungen 43 des Kölbchens 42 mit einer Rücklaufkammer 45 in Verbindung, so daß überschüssiges Öl über eine Bohrung 44 der Scheibe 38 in einen an den Tank angeschlossenen Raum 46 abfließen kann.

Die Fig. 6 zeigt eine weitere Ausführungsform für die Einleitung eines variablen Druckes in die Rückwirkungseinrichtung. Hier steht die den Pumpendruck führende Ringnut 33 über ein Elektromagnetventil 47 mit der Axialbohrung 34 in Verbindung. Das Elektromagnetventil 47 erhält ein geschwindigkeitsabhängiges Tachosignal, so daß dieses bei langsamer Fahrt schließt und bei schneller Fahrt öffnet. Die Rückwirkungskraft auf den Wälzkörper 40 läßt sich dadurch bei schneller Fahrt vergrößern. Das Abschneidventil 41, 42, 43 arbeitet entsprechend der Fig. 5.

| Bezugszeichen | | | |
|---|---|---|---|
| 1 | Ventilgehäuse | 33 | Ringnut |
| 2 | Lenkspindel | | |
| 3 | Drehstab | Fig. 5 | |
| 4 | Abtriebswelle | 34 | Axialbohrung |
| 5 | Drehschieber | 35 | kl. Bohrung |
| 6 | Ventilbuchse | 36 | Feder |
| 7 | Tank | 37 | Kolben |
| 8 | Kochdruckpumpe | 38 | Scheibe |
| 9 | - | 39 | - |
| 10 | Ringnut | 40 | Wälzkörper |
| 11 | Bohrung | 41 | Feder |
| 12 | Zulaufnut | 42 | Abschneidkölbchen |
| 13 | Zylindernuten | 43 | Anflächungen |
| 14 | Zylindernuten | 44 | Bohrung von 38 |
| 15 | Ringnut | 45 | Rücklaufkammer |
| 16 | Ringnut | 46 | Raum |
| 17 | Stellmotor | 47 | Elektromagnetventil |
| 18 | Rücklaufnuten | | |
| 19 | - | | |
| 20 | Bohrungen | | |
| 21 | Innenraum | | |
| 22 | Bohrung | | |
| 23 | Kammer | | |
| 24 | Axialbohrung | | |
| 25 | Feder | | |
| 26 | Wälzkörper | | |
| 27 | Vorsprung | | |
| 27A | Vorsprung | | |
| 28 | Schrägflächennut | | |
| 29 | - | | |
| 30 | Scheibe | | |
| 31 | Stift | | |
| 32 | Aussparung | | |
| 32A | Aussparung | | |

## Patentansprüche

1. Drehschieberventil, insbesondere für hydraulische Hilfskraftlenkungen, mit folgenden Merkmalen:
- eine in einem Gehäuse (1) gelagerte Ventilbuchse (6) umschließt einen Drehschieber (5);
- die Ventilbuchse (6) steht mit einer Abtriebswelle (4) und der Drehschieber (5) mit einer ein Lenkhandrad tragenden Lenkspindel (2) in Verbindung;
- ein Drehstab (3) verbindet die Lenkspindel (2) mit der Abtriebswelle (4);
- zwischen der Ventilbuchse (6) und dem Drehschieber (5) ist eine Rückwirkungseinrichtung (25, 26, 30) eingebaut, die aus Schrägflächen mit zwischen den Schrägflächen abrollenden Wälzkörpern (26) besteht;
- auf die Wälzkörper (26) wirkt eine Kraft, die man beim Aussteuern des Drehschieberventils (5, 6) am Lenkhandrad überwinden muß,
**gekennzeichnet** durch folgende Merkmale:
- die Ventilbuchse (6) weist in ihrer freien Stirnseite mindestens eine Axialbohrung (24) auf;
- als Rückwirkungseinrichtung sitzt in der Axialbohrung (24) eine Feder (25) und der durch diese belastete Wälzkörper (26);
- auf der Lenkspindel (2) ist eine festlegbare Scheibe (30) mit einer Schrägflächennut (28) vorgesehen, wobei die Schrägflächennut nach dem Ausrichten mit dem Wälzkörper (26) zusammenwirkt.

2. Drehschieberventil nach Anspruch 1, dadurch **gekennzeichnet,** daß der Drehstab (3) und die Scheibe (30) nach dem Einstellen auf die hydraulische Mitte des Drehschieberventils (5, 6) durch einen gemeinsamen Stift (31) mit der Lenkspindel (2) verbunden sind.

3. Drehschieberventil nach Anspruch 1, **gekennzeichnet** durch folgende Merkmale:
- die Ventilbuchse (6) weist im Bereich der Axialbohrung (24) für die Aufnahme der Rückwirkungseinrichtung (25, 26) einen Vorsprung (27) auf und
- der Vorsprung (27) greift mit Spiel in eine Aussparung (32) der Lenkspindel (2) für die Steuerwegbegrenzung des Drehschieberventils (5, 6) ein.

4. Drehschieberventil nach Anspruch 1, dadurch **gekennzeichnet,** daß die Axialbohrung (24) zugleich Rückwirkungskammer ist, in welche über eine an die Hochdruckpumpe (8) angeschlossene Ringnut (33) der Ventilbuchse (6) ein variabler Druck als Reaktionsdruck eingeleitet wird (Fig. 5).

5. Drehschieberventil nach Anspruch 1, dadurch **gekennzeichnet,** daß die Axialbohrung (24) neben der aus Feder (36) und Wälzkörper (40) bestehenden Rückwirkungseinrichtung ein Abschneidventil (41, 42, 43) zur Begrenzung des Reaktionsdruckes enthält (Fig. 5 und 6).

6. Drehschieberventil nach Anspruch 4, **gekennzeichnet** durch folgende Merkmale:
- die Feder (36) belastet einen Kolben (37);
- der Kolben (37) stützt sich über eine Scheibe (38) an dem Wälzkörper (40) ab und
- im Kolben (37) ist ein durch eine Feder (41) belastetes Abschneidkölbchen (42) geführt (Fig. 5 und 6).
